# EUROPEAN PATENT APPLICATION

(11) **EP 4 287 551 A1**
(43) Date of publication of application: **06.12.2023**
(21) Application number: 22176090.3
(22) Date of filing: 30.05.2022
(51) Int. Cl.: H04L 9/08

(54) **SECURE QUANTUM COMMUNICATION USING FREQUENCY HOPPING**

(71) Applicant: Fraunhofer-Gesellschaft zur Förderung der angewandten Forschung e.V., 80686 München (DE)
(72) Inventor: Cabrejo Ponce, Meritxell, 07743 Jena (DE); Gómez, Rodrigo Miguel, 07745 Jena (DE); Steinlechner, Fabian, 07745 Jena (DE); Sondenheimer, René, 07743 Jena (DE)
(74) Representative: Louis Pöhlau Lohrentz

(57) **Abstract**

It is claimed a method for secure quantum communication and secure quantum key distribution (QKD), comprising a source (1) and one or more receivers (3) connected with the source (1) via a quantum channel (2) each, comprising the steps,
i) generation of a quantum signal (14), preferably in the source (1);
ii) transmission of the quantum signal (14) to the one or more receivers (3) via the quantum channel (2) each;
iii) detection of the quantum signal (14) at the one or more receivers (3), preferably in a detection means;

According to the invention, in step i) frequency hopping at the generation of the quantum signal (14) is realized, preferably by a source (1) hopping means (10), and/or
in step iii) frequency hopping at the detection of the quantum signal (14) in the one or more receivers (3) is realized, preferably by a receiver hopping means (30).

## Description

The present invention provides a method for secure quantum communication according to the preamble of claim 1 and a system for secure quantum communication according to the preamble of claim 14.

Optical signals like quantum states of light, in particular single-photon states allow the transmission of information between users, and thus enable a secure communication or the generation of a secure key by quantum key distribution (QKD). The security provided by quantum key distribution (QKD) is harnessed to the laws of quantum physics and thus independent of algorithm or computational power. In theory, quantum key distribution (QKD) is perfectly secure.

However, quantum communication and quantum key distribution (QKD) require the detection of the single photons at the receivers. Due to that, known quantum communication systems and systems for quantum key distribution (QKD) are vulnerable to so called detector blinding attacks.

In a detector blinding attack, the quantum hacker usually called Eve, inserts a bright light pulse into the quantum channel between the source and a receiver that matches the wavelength of the quantum signals used to produce a key, and thereby modifies the functionality of the single photon detectors at the receiver.

For example, for single photon avalanche diode (SPAD) detectors, the blinding attack forces the single photon detector from the Geiger mode into a proportional mode. By carefully tuning the power of the blinding laser, Eve can gain full control over the voltage response of the single photon detector, and thereby fake a secure detection sequence for quantum key distribution (QKD) at the receiver.

Known systems counter these blinding attacks for example by monitoring the photocurrent of their single photon detectors.

It is an object of the present invention to provide an improved, cost efficient, and more fundamental method and system for a secure quantum communication and secure quantum key distribution (QKD), preferably a secure quantum communication and secure quantum key distribution (QKD) not vulnerable on detector blinding attacks.

According to the present invention, a method is provided according to claim 1.

This object is achieved by a method for secure quantum communication and secure quantum key distribution (QKD), comprising a source and one or more receivers connected with the source via a quantum channel each, comprising the steps,
i) generation of a quantum signal, preferably in the source;
ii) transmission of the quantum signal to the one or more receivers via the quantum channel each;
iii) detection of the quantum signal at the one or more receivers, preferably in a detection means;

According to the inventing in step i) frequency hopping at the generation of the quantum signal is realized, preferably by a source hopping means, and/or in step iii) frequency hopping at the detection of the quantum signal in the one or more receivers is realized, preferably by a receiver hopping means.

According to the present invention, a system is provided according to claim 14.

This object is achieved by a system for secure quantum communication and quantum key distribution (QKD), comprising
a source for the generation of a quantum signal, and
one or more receivers, comprising a detection means each, for the detection of the quantum signal, and
a quantum channel in order to connect the source with the one or more receivers each, for the transmission of the quantum signal from the source to the one or more receivers.

According to the invention the quantum channel is a multi-frequency transmission channel for the quantum signal, and
the source comprises a source hopping means, in order to enable a frequency hopping at the generation of the quantum signal, and/or
the one or more receivers comprise a receiver hopping means, preferably at one or more or all receivers, in order to enable a frequency hopping at the detection of the quantum signal.

An advantage of the inventive method and the inventive system is that by frequency hopping a detector blinding attack implemented by an eavesdropper would not lead to fake a secure detection sequence for quantum key distribution (QKD). The potential eavesdropper would be forced to implement the detector blinding attack on all possible frequencies in parallel, thereby making the approach impractical and easily detectable in the case of fiber networks or beyond reach of state of the art and future laser technology in the case of satellite-based systems.

In a preferred embodiment, the quantum signal is a sequence of single photons, or a sequence of entangled photons, or a sequence of faint laser pulses for decoy state quantum key distribution (QKD). In a preferred embodiment, the sequence of entangled photons is a sequence of entangled photon pairs, or a sequence of multi-photon entangled states. In a preferred embodiment, the entangled photons are entangled in polarization, and/or time, and/or frequency, and/or orbital angular momentum (OAM) and/or spin angular momentum (SAM).

Frequency hopping means a possible change of the frequency at the generation and/or the detection of each single photon or entangled photon of the sequence.

Faint laser pulses for decoy state quantum key distribution (QKD) are described by signal states and decoy states for a decoy state quantum key distribution (QKD) protocol. Signal and decoy states only have different mean photon numbers, thus the signal state can be a single photon state with mean photon number 1. Decoy states are used to estimate the detection gain and error rate of single-photon pulses in the signal states. The hopping applies in this example to the signal state and to the decoy state.

In a preferred embodiment, the method and the system are used for discrete variable quantum key distribution or for continuous variable quantum key distribution. As an example, for continuous variable quantum key distribution a squeezed based quantum key distribution protocol can be used while hopping the squeeze light center frequency.

In a preferred embodiment, by frequency hopping the quantum signal is generated in step i) in at least two different frequencies, and/or by frequency hopping the quantum signal is detected in step iii) in at least two different frequencies. Generation of the quantum signal in at least two different frequencies means, that each photon of the sequence of single photons, or the sequence of entangled photons, or the sequence of faint laser pulses for decoy state quantum key distribution (QKD) comprises one out of the at least two different frequencies. Detection of the quantum signal in at least two different frequencies means, that each photon of the sequence of single photons, or the sequence of entangled photons, or the sequence of faint laser pulses for decoy state quantum key distribution (QKD) is detected in one out of the at least two different frequencies, preferably each photon detected comprises one out of the at least two different frequencies.

In a preferred embodiment, the frequency of the photons of the quantum signal generation in step i) and/or the detection in step iii) is based on a deterministic order or the frequency is chosen randomly for each photon. In a preferred embodiment, the photons with the at least two different frequencies are generated in step i) and/or detected in step iii) in a deterministic order or randomly. The advantage of the generation and the detection in a deterministic order is the high key generation rate when the source and the one or more receivers agreed on the deterministic order in advance. The advantage of the generation and/or detection randomly is the additional security.

In a preferred embodiment, the at least two different frequencies are two, or three, or four, or five, or more different frequencies. In a preferred embodiment, the different frequencies have a bandwidth, preferably a bandwidth in the range of 5 nm to 10 pm.

In a preferred embodiment, the possible change of the frequency by frequency hopping takes place after a certain period of time, preferably called hopping window. In a preferred embodiment, the frequency in a certain period of time is one out of the two or more different frequencies.

In a preferred embodiment, the hopping window is a fixed period of time or a variable period of time. In a preferred embodiment, the frequency hopping takes place after the generation of a single photon or entangled photon, or after the detection of a single photon or entangled photon. In a preferred embodiment, the hopping window comprises none, or one, or more single photons, or entangled photons. In a preferred embodiment, the hopping window is in the range of 100 ns to 10 ps, preferably in the range of 10 ns to 100 ps.

In a preferred embodiment, the frequency hopping is realized at the generation in step i) and at the detection in step iii), preferably the source comprises a source hopping means and the one or more receivers comprises a receiver hopping means, preferably at one or more or all receivers. In this embodiment, the source and the one or more receivers agreed on the deterministic order in advance, or the generated frequency and/or the detected frequency is chosen randomly.

In a preferred embodiment, the frequency hopping is realized only at the generation in step i), preferably the source comprises a source hopping means. In this embodiment, the one or more receivers are able to detect the quantum signal in each of the at least two different frequencies all the time.

In a preferred embodiment, the frequency hopping is realized only at the detection in step iii), preferably the one or more receivers comprises a receiver hopping means, preferably at one or more or all receivers. In this embodiment, the source generates the quantum signal in all of the at least two different frequencies.

In a preferred embodiment with entangled photons, the frequency hopping at the detection in step iii) is realized at one receiver, or more receivers, or all receivers. In the embodiment with frequency hopping at one receiver, the second or more receivers are able to detect the quantum signal, preferably the partner photon/s of the quantum signal, in each of the at least two different frequencies all the time.

In a preferred embodiment, the source is a single photon source generating a sequence of single photons, or the source is a faint laser pulse source generating a sequence of single photons and/or a sequence of faint laser pulses for decoy state quantum key distribution (QKD), or the source is an entangled photon source generating a sequence of entangled photons, preferably a sequence of entangled photon pairs or a sequence of a multi-photon entangled state.

In a preferred embodiment, the source hopping means enables the frequency hopping by passive modulation and/or by active modulation. Passive modulation means, that the generation of the single photons, entangled photons, or faint laser pulses in a specific frequency out of the two or more frequencies is based on a random generation process, for example by the generation process of the single photons or entangled photons in a broad band source. Active modulation means, that the generation of the single photons, entangled photons, or faint laser pulses in a specific frequency out of the two or more frequencies is based on an active choice or switching, for example by different pump laser frequencies or the active frequency change in a frequency modulation means.

In a preferred embodiment, the source comprises two or more filters and/or cavities in order to discretize the two or more frequencies.

In a preferred embodiment, the single photon source comprises, preferably for the generation in step i), one or more attenuated laser, and/or one or more on-demand single photon sources, preferably quantum dots. In a preferred embodiment, the single photons are generated in step i) by one or more attenuated laser, and/or one or more on-demand single photon sources, preferably quantum dots, as the single photon source.

In a preferred embodiment, the single photon source comprises also an additional source state generation means, to switch the generation of the photons between at least two pairs of conjugate measurement basis. In a preferred embodiment, the states are polarization states, and/or time-bin states, and/or orbital angular momentum (OAM) states, and/or spin angular momentum (SAM) states. For the generation of polarization states for example a polarizer can be used. For the generation of time-bin states an unbalanced Michelson-Interferometer can be used, or an on-demand single photon source. For the generation of orbital angular momentum (OAM) states, and/or spin angular momentum (SAM) a pinhole plate or a spatial light modulator (SLM) can be used.

In a preferred embodiment, the frequency hopping in the source with single photons in step i) is realized by the generation of the quantum signal by at least two attenuated lasers and/or at least two on-demand single photon sources with different frequencies in order to generate single photons with at least two different frequencies. In a preferred embodiment, the source hopping means of the single photon source are at least two attenuated lasers and/or at least two on-demand single photon sources with different frequencies in order to generate single photons with at least two different frequencies. In this embodiment, the frequency hopping can be realized by the generation of the single photons by the different lasers or by the different on-demand single photon sources. This is an example of an active modulation.

In a preferred embodiment, the frequency hopping in the source with single photons in step i) is realized by the generation of the quantum signal by a frequency modulation of the single photons in order to generate single photons with at least two different frequencies. In a preferred embodiment, the source hopping means of the single photon source is a frequency modulator. In a preferred embodiment, the frequency modulator is a phase modulator, preferably an electro-optic modulator and/or acousto-optic modulator, in order to change the frequency of the single photon on demand. This is an example of an active modulation. In this embodiment, the frequency hopping can be realized by the single photon source and the possibility to change the frequency of the single photons by the frequency modulator.

In a preferred embodiment, the frequency hopping in the source with single photons in step i) is realized by the generation of the quantum signal by a random generation of the single photon in a specific wavelength out of the broad frequency band of the laser or on demand single photon source by the generation process in order to generate single photons with at least two different frequencies. In a preferred embodiment, the source hopping means of the single photon source is a broad band single photon source, preferably a broad band attenuated laser or a broad band on-demand single photon source. In this embodiment, the frequency hopping is realized by the random generation of the single photon in a specific wavelength out of the broad frequency band of the laser or on demand single photon source by the generation process. This is an example of a passive modulation. The choice whether the broad band single photon source is a passive modulation source hopping means or one out of a multitude of single photon sources in an active modulation depends on the choice of the bandwidth of the two or more frequencies.

In a preferred embodiment, the frequency hopping in the source with single photons in step i) is realized by the generation of the quantum signal by a controlled selection of the frequency out of the broad frequency band of the laser or on-demand single photon source. In a preferred embodiment, the source hopping means of the single photon source is a broad band single photon source and a controllable source frequency selection means. In a preferred embodiment, the source frequency selection means is a wavelength-division demultiplexer, preferably a grating, and/or a diffraction grating, and/or a prism, and/or a fiber Bragg grating. In this embodiment, the frequency hopping is realized by the controlled selection of the frequency out of the broad frequency band of the laser or on-demand single photon source. This is an example of an active modulation.

The above-described source hopping means of the single photon source can also be combined for the generation of single photons with different frequencies.

In a preferred embodiment, the faint laser pulse source comprises one or more controllable attenuated laser generating single photons and/or of faint laser pulses for decoy state quantum key distribution (QKD) as signal states and/or decoy states for a decoy state quantum key distribution (QKD) protocol. Signal and decoy states only have different mean photon numbers. Decoy states are used to estimate the detection gain and error rate of single-photon pulses in the signal states.

In a preferred embodiment, the faint laser pulse source comprises also an additional source state generation means, to switch the generation of the photons between at least two pairs of conjugate measurement bases. In a preferred embodiment, the states are polarization states, and/or time-bin states, and/or orbital angular momentum (OAM) states, and/or spin angular momentum (SAM) states. For the generation of polarization states for example a polarizer can be used. For the generation of time-bin states an unbalanced Michelson-Interferometer can be used, or an on-demand single photon source. For the generation of orbital angular momentum (OAM) states, and/or spin angular momentum (SAM) a pinhole plate or a spatial light modulator (SLM) can be used.

In a preferred embodiment, the frequency hopping in the source with faint laser pulses in step i) is realized by the generation of the quantum signal by at least two attenuated lasers with different frequencies in order to generate a quantum signal with at least two different frequencies. In a preferred embodiment, the source hopping means of the faint laser pulse source are at least two attenuated lasers with different frequencies in order to generate single photons and/or faint laser pulses for decoy state quantum key distribution (QKD) with at least two different frequencies. In this embodiment, the frequency hopping can be realized by the generation of the single photons and/or the faint laser pulses for decoy state quantum key distribution (QKD) as signal states and/or decoy states by the two different lasers. This is an example of an active modulation.

In a preferred embodiment, the frequency hopping in the source with faint laser pulses in step i) is realized by the generation of the quantum signal by a frequency modulation of the faint laser pulses in order to generate single photons and/or faint laser pulses for decoy state quantum key distribution (QKD) with at least two different frequencies. In a preferred embodiment, the source hopping means of the faint laser pulse source is a frequency modulator. In a preferred embodiment, the frequency modulator is a phase modulator, preferably an electro-optic modulator and/or acousto-optic modulator, in order to change the frequency of the single photons and/or the faint laser pulses for decoy state quantum key distribution (QKD) as signal states and/or decoy states on demand. This is an example of an active modulation. In this embodiment, the frequency hopping can be realized by the faint laser pulse source and the possibility to change the frequency of the single photons and/or faint laser pulses for decoy state quantum key distribution (QKD) as signal states and/or decoy states by the frequency modulator.

In a preferred embodiment, the frequency hopping in the source with faint laser pulses in step i) is realized by the generation of the quantum signal by a random generation of the faint laser pulses in a specific wavelength out of the broad frequency band of the laser by the generation process in order to generate single photons and/or faint laser pulses for decoy state quantum key distribution (QKD) with at least two different frequencies. In a preferred embodiment, the source hopping means of the faint laser pulse source is a broad band faint laser pulse source, preferably a broad band attenuated laser. In this embodiment, the frequency hopping is realized by the random generation of the single photons and/or faint laser pulses for decoy state quantum key distribution (QKD) as signal states and/or decoy states in a specific wavelength out of the broad frequency band of the laser or on-demand faint laser pulse source by the generation process. This is an example of a passive modulation. The choice whether the broad band faint laser pulse source is a passive modulation source hopping means or one out of a multitude of faint laser pulse sources in an active modulation depends on the choice of the bandwidth of the two or more frequencies.

In a preferred embodiment, the frequency hopping in the source with faint lasers pulses in step i) is realized by the generation of the quantum signal by a controlled selection of the frequency out of the broad frequency band of the laser. In a preferred embodiment, the source hopping means of the faint laser pulse source is a broad band faint laser pulse source, preferably a broad band attenuated laser, and a controllable source frequency selection means. In a preferred embodiment, the source frequency selection means is a wavelength-division demultiplexer, preferably a grating and/or a diffraction grating, and/or a prism, and/or a fiber Bragg grating. In this embodiment, the frequency hopping is realized by the controlled selection of the frequency out of the broad frequency band of the attenuated laser. This is an example of an active modulation.

The above-described source hopping means of the faint laser pulse source can also be combined for the generation of single photons and/or faint laser pulses for decoy state quantum key distribution (QKD) with different frequencies.

In a preferred embodiment, the entangled photon source comprises at least a pump laser and a non-linear element pumped by the laser in order to generate entangled photons, preferably a non-linear crystal or a non-linear waveguide. In a preferred embodiment, the entangled photons are generated in step i) by a non-linear effect, preferably by spontaneous parametric down conversion (SPDC) or spontaneous four wave mixing.

In a preferred embodiment, the non-linear element is arranged in a Sagnac loop, or in a microring resonator, or an unbalanced Mach Zehnder interferometer, and/or a beam displacer. In a preferred embodiment, the non-linear element comprises two non-linear crystals rotated by 90° to each other, and/or one or more non-linear crystals depending on the geometry or interferometer.

In a preferred embodiment, the entangled photon source generates degenerated or non-degenerated entangled photons, preferably degenerated or non-degenerated entangled photon pairs. Degenerated means, that the signal photon and the idler photon of one entangled photon pair comprise the same wavelength. Non-degenerated means, that the signal photon and the idler photon of one entangled photon pair comprise different wavelengths.

In a preferred embodiment, the frequency hopping in the entangled photon source in step i) is realized by the generation of the quantum signal by at least two pump lasers with different wavelength pumping the non-linear medium in order to generate entangled photons with at least two different frequencies. In a preferred embodiment, the source hopping means of the entangled photon source are at least two pump lasers with different wavelength. In this embodiment, the frequency hopping can be realized by pumping the non-linear element with different wavelengths and the resulting generation of the entangled photons in different wavelengths due to the phase-matching conditions of the non-linear element and energy conservation in the non-linear process. This is an example of an active modulation. In this example the different pump laser beams can be combined by optical means, and/or optical switches in order to enable a switchable pumping of the non-linear element.

In a preferred embodiment, the frequency hopping in the entangled photon source in step i) is realized by the generation of the quantum signal by a frequency modulation of the pump laser pumping the non-linear medium in order to generate entangled photons with at least two different frequencies. In a preferred embodiment, the source hopping means of the entangled photon source is at least one modulated pump laser with different wavelength. In this embodiment, the frequency hopping can be realized by pumping the non-linear element with different wavelengths and the resulting generation of the entangled photons in different wavelengths due to the phase-matching conditions of the non-linear element and energy conservation in the non-linear process. This is an example of an active modulation. This embodiment can be used for the entangled photon source with spontaneous four wave mixing driving the non-linear process in a non-linear microring resonator (MRR). The pump laser will couple to one frequency resonance of the microring resonator MRR or the next one, preferably with a spacing of 25, 50, 100, or 200 GHz depending on the free spectral range (FSR) of the microring resonator MRR. For a fixed pump wavelength, the spontaneously generated photons will have frequency correlations symmetrically around the pump. For a frequency-shifted pump, the frequency correlations of the photon pairs will shift accordingly, with symmetrical correlations around the new pump wavelength due to energy conservation. This embodiment can also be used for spontaneous parametric down-conversion. The non-linear element, for example a non-linear crystal or waveguide, can be arranged integrated in a cavity or the non-linear element itself is a cavity, allowing a discretized set of frequencies to exist. The pump modulation has to match the resonance frequencies in order to modulate the frequency correlations of the generated photon pairs. In an example when the non-linear element is not included in a cavity or does not form a cavity, the frequency correlation of the photons is also be modulated by the modulated pump laser, with arbitrary frequency shifts according to the acceptance bandwidth of the crystal. In a preferred embodiment, the modulation of the pump laser can be realized for example by a grating for example in a grating stabilized external cavity diode laser. In a preferred embodiment, the frequency modulation of the pump laser can be performed by an electro-optic modulation with complex radiofrequency (RF) signals. In a preferred embodiment, frequency modulation of the pump laser can be performed by an acousto-optic modulator.

In a preferred embodiment, the frequency hopping in the entangled photon source in step i) is realized by the generation of the quantum signal by pumping at least two different non-linear media in order to generate entangled photons with at least two different frequencies. In a preferred embodiment, the source hopping means of the entangled photon source are at least two non-linear elements generating entangled photons with different wavelength when pumped with the pump laser. In this embodiment, the frequency hopping can be realized by pumping the different non-linear element with the same wavelength and the resulting generation of the entangled photons in different wavelengths due to the phase-matching conditions of the non-linear element and energy conservation in the non-linear process. This is an example of an active modulation.

In a preferred embodiment, the frequency hopping in the entangled photon source in step i) is realized by the generation of the quantum signal by a temperature change of the non-linear medium in order to generate entangled photons with at least two different frequencies. In a preferred embodiment, the source hopping means of the entangled photon source is the non-linear element and a temperature controller generating entangled photons with different wavelengths when pumped with the pump laser. In this embodiment, the frequency hopping can be realized by pumping the one non-linear element with the same wavelength at different temperatures and the resulting generation of the entangled photons in different wavelengths due to the phase-matching conditions of the non-linear element and energy conservation in the non-linear process. This is an example of an active modulation. In this example the different frequencies are generated by tuning of the phase-matching condition of the non-linear element, preferably the non-linear crystal. In a preferred embodiment, the phase matching of the non-linear element for spontaneous parametric down conversion (periodically poled or not) is controlled by tuning the temperature of the non-linear element and the spatial modes of the pump laser. The phase-matching conditions depend on the wavenumber vectors (k) of the whole system, the pump laser beam and the corresponding signal and idler photons of a generated entangled photon pair *k̅ₚᵤₘₚ = k̅_{signal}* + *k̅_{idler}* (+Δ) where Δ refers to the possible poling of the crystal. The k-vectors depend on the angles of propagation or more specifically, the optical modes, as well as the refractive index of the material. Therefore, temperature can be used to tune the refractive index of the crystals according to the Sellmeier equation, and favour the generation of degenerate or nondegenerate wavelengths for the photon pairs. This embodiment enables to shift the frequencies by up to hundreds of nm. It is also possible, by shaping the spatial modes of the pump laser, the k-vectors of the phase-matching condition can be restricted or tailored in such a way that the frequency correlations of the photon pairs are also controlled.

In a preferred embodiment, the frequency hopping in the entangled photon source in step i) is realized by the generation of the quantum signal by a frequency modulation of the pump laser and/or one or more of the entangled photons in order to generate entangled photons with at least two different frequencies. In a preferred embodiment, the source hopping means of the entangled photon source is a frequency modulator in order to change the frequency of the pump laser and/or of one or more of the entangled photons. In a preferred embodiment, the phase modulator is an electro-optic modulator and/or acousto-optic modulator, in order to change the frequency of one or both or more entangled photons. In this embodiment, the frequency hopping can be realized by the change of the frequency generated entangled photons by the frequency modulator. This is an example of an active modulation.

In a preferred embodiment, the frequency hopping in the source with entangled photons in step i) is realized by the generation of the quantum signal by a random generation of the entangled photons in a specific wavelength out of the broad frequency band entangled photons by the generation process in order to generate single photons with at least two different frequencies. In a preferred embodiment, the source hopping means of the entangled photon source is a broad band entangled photon source. The broad band entangled photon source can be realized for example by a broad pump laser and/or a long non-linear element. Broad band quantum signal generated for example by spontaneous parametric down conversion or spontaneous four wave mixing are in a quantum superposition of many frequencies. That means every photon state will be assigned a random frequency from the available frequencies in the system, always according to energy conservation. Therefore, spontaneous parametric down conversion or spontaneous four wave mixing provide the frequency randomness necessary to perform the frequency hopping. This is an example of a passive modulation. The choice whether the broad band entangled photon source is a passive modulation source hopping means or a broad band entangled photon source without passive modulation depends on the choice of the bandwidth of the two or more frequencies generated in the source and detected at the one or more receivers.

Passive frequency modulation can be obtained in non-linear processes that require energy conservation such as spontaneous parametric down conversion or spontaneous four wave mixing. In these processes, the generated photons are strongly correlated in frequency with a bandwidth defined by the characteristics of the entangled photon source. Spontaneous parametric down conversion architectures can use in addition external filtering to discretize the frequency modes in the entangled photon source bandwidth for the different frequencies. In another example, the entangled photon source can be integrated in a cavity to increase the efficiency of the photon generation and naturally discretize the frequencies. Spontaneous four wave mixing architectures comprise integrated cavities to increase the generation efficiency generating discretized frequencies. Entangled photons generated in these entangled photon sources are known to be in a quantum superposition of many frequency modes: every photon state will be assigned a random frequency from the available frequency set in the system, always according to energy conservation.

In a preferred embodiment, the frequency hopping in the source with entangled photons in step i) is realized by the generation of the quantum signal by controlled selection of the frequency out of the broad frequency band of the entangled photon source. In a preferred embodiment, the source hopping means of the entangled photon source is a broad band entangled photon source and a source frequency selection means. In a preferred embodiment, the source frequency selection means is a wavelength-division demultiplexer, preferably a grating and/or a diffraction grating, and/or a prism, and/ or a fiber Bragg grating. In this embodiment, the frequency hopping is realized by the selection of the frequency out of the broad frequency band entangled photons.

The above-described source hopping means of the entangled photon source can also be combined for the generation of entangled photons with different frequencies.

In a preferred embodiment, the quantum channel is a guided channel, preferably a fiber channel or the quantum channel is an unguided channel, preferably free space channels. In a preferred embodiment, in step ii) the transmission is realized by guidance of the quantum signal in a guided quantum channel, preferably in a fiber. In a preferred embodiment, in step ii) the transmission is realized by the alignment of the quantum signal in the source and an unguided transmission in an unguided channel, preferably in a free space channel.

In a preferred embodiment, the at least two different frequencies are transmitted via one quantum channel from the source to the one or more receivers each.

In a preferred embodiment, the receiver comprises a receiver wavelength de-multiplexer, a measurement means, and a detection means to measure and detect the single photons or the entangled photons, preferably in order to generate a key by a quantum key distribution (QKD) protocol.

In a preferred embodiment, for the detection in step iii) the receiver is capable to select one frequency out of the at least two different frequencies, preferably in each hopping window anew. In a preferred embodiment, the selection is realized by the receiver wavelength de-multiplexer, or by the choice which detector is used for the key generation, preferably in each hopping window anew.

In a preferred embodiment, the receiver wavelength de-multiplexer is a filter, and/or a grating, and/or a prism, and/or an arrayed waveguide grating, and/or a meta surface. The receiver wavelength de-multiplexer, preferably in step iii), splits the quantum channel with the two or more frequencies between the source and the receiver into two or more quantum channels with one out of the two or more frequencies each, preferably between the receiver wavelength de-multiplexer and the one or more detectors. The two or more quantum channels with one out of the two or more frequencies each guide the single photon or the entangled photon via the measurement means to the detection means.

In a preferred embodiment, the measurement means comprises a polarization means to determine the polarization of the single photons or the entangled photons, and/or a time means to determine the time-bin of the single photons or the entangled photons, and/or an orbital angular momentum (OAM) means and/or spin angular momentum (SAM) means to determine the orbital angular momentum (OAM) and/or spin angular momentum (SAM) of the single photons or the entangled photons in at least two mutually unbiased bases in order to enable a key generation by a quantum key distribution (QKD) protocol.

In a preferred embodiment, the measurement means measure the quantum signal in at least two mutually unbiased bases in order to generate a key by a quantum key distribution (QKD) protocol, preferably a quantum key distribution (QKD) protocol for single photons, or for entangled photons, or for faint laser pulses for decoy state quantum key distribution (QKD).

In a preferred embodiment, the detection means for single photons or entangled photons comprises one or more detectors, preferably single photon detectors, more preferably single photon avalanche diode (SPAD) detectors, and/or nanowires, and/or transition edge detectors.

In a preferred embodiment, the detection means for faint laser pulses for decoy state quantum key distribution (QKD) comprises one or more detectors, preferably single photon detectors, or photodetector, or a diode, or a PIN-Diode in order to measure the intensity and the mode of the faint laser pulse.

In a preferred embodiment, the detection means comprises two or more detectors in order to enable a detection of the quantum states in two or more different frequencies. In this embodiment, each detector detects single photons or entangled photons in one out of the two or more different frequencies enable the receiver to detect single photons or entangled photons in the two or more frequencies. This embodiment is realized, when there is no frequency hopping at the receiver in step iii).

In a preferred embodiment, the frequency hopping at the receiver in step iii) is realized by the active choice which detector is used in each hopping window for the detection of the quantum signal in that hopping window. In a preferred embodiment, the receiver hopping means are at least two or more detectors and the choice which detector is used in the hopping window, preferably by an electronic means. Detection events in all other detectors in this hopping window are discarded for the key generation. In a preferred embodiment, each detector detects single photons or entangled photons in one out of the two or more frequencies separated by the receiver wavelength de-multiplexer. In this embodiment, the receiver can realize a frequency hopping by the active choice which detection event at which detector is used at which hopping window for the key generation. The choice can be done in accordance with the frequency hopping by the source or by the own choice of the receiver, preferably by an electronic means.

In a preferred embodiment, the frequency hopping at the receiver in step iii) is realized by the selection of detected frequency at one detector by a controllable wavelength de-multiplexer. In a preferred embodiment, the detection means comprises one detector and a controllable wavelength de-multiplexer. In this embodiment the receiver hopping means is the one detector and the controllable wavelength de-multiplexer arranged in front of the one detector. In a preferred embodiment, the controllable wavelength de-multiplexer guides single photons, or entangled photons with one out of the two or more frequencies to the detector. The choice which frequency is used for the detection is realized by the controllable wavelength de-multiplexer.

In a preferred embodiment, for only a frequency hopping at the receiver in step iii) the source generates a quantum signal in each of the two or more wavelengths. By the frequency hopping at the receiver in step iii) the receiver decides which single photon or entangled photon or which quantum signal is used for the key generation.

In a preferred embodiment, the method comprises in addition a step iv), iv) communication of the frequency hopping at the source and/or at the one or more receivers between the source and the one or more receivers in order to generate a key by a quantum key distribution (QKD) protocol, preferably between the source and one receiver or between two or more receivers.

In a preferred embodiment, the one or more receivers monitor the intensity of a not for the key generation used detection channel in order to detect a detector blinding attack. Preferably, the detection of a not for the key generation used detection channel is realized by a photodetector, or a photo diode or PIN-diode in order to measure the intensity.

In a preferred embodiment, the source and/or the one or more receivers comprise in addition an electronic means each to control the source hopping means or the receiver hopping means and in order to communicate the frequency hopping in order to establish a key by a quantum key distribution (QKD) protocol. The communication can be established before the generation and detection in order to agree on a predetermined frequency hopping sequence, or the communication can be established after the generation and/or detection for a random chosen frequency hopping at the source and/or the two or more receivers. In a preferred embodiment, the electronic means at the receiver can also be used to receive the detection events of the detectors, and/or to determine coincidences of entangled photons. In a preferred embodiment, the electronic means is a computer or a field programmable gate array (FPGA).

In the following, multiple non-exclusive examples of the inventive method and system are described in detail.

In a first example the source is a broad band entangled photon source with spontaneous parametric down conversion as a passive source modulation means generating entangled photon pairs. In this first example the frequency hopping is realized by the source. In this example the entangled photon source generates a quantum signal with non-degenerated entangled photon pairs with two different wavelengths, in summary photons with four different frequencies. Non-degenerated means the wavelength of the signal photon and the idler photon of each entangled photon pair is different. Two entangled photon pairs with different wavelength means that the wavelengths of the signal photon of the first pair differs from the wavelengths of the signal photon of the second pair. This can be realized for example by a broad pump laser and energy conservation in the non-linear medium at the generation. In addition, an external filtering to discretize the frequency modes can be used. In that first example, the two receivers comprise a wavelength de-multiplexer and two detectors each. The first receiver can measure the signal photons in two different wavelengths and the second receiver can measure the idler photons in two different wavelengths. After the detection the two receivers communicate the passive frequency hopping of the source by the detection events at each receiver at the different detectors.

For an example with hopping only at one receiver, this example comprises the source and one receiver. The source generates quantum signals with single photons simultaneously with two different wavelengths, without hopping. The receiver comprises a controllable wavelength de-multiplexer and one detector. The hopping is realized by the selection of detected frequency at one detector by a controllable wavelength de-multiplexer. The key is generated out of the multiple quantum signals by the selection at the receiver. For that, the receiver has to communicate the chosen frequency and the timing to the source.

The above and other aspects, features and advantages of the present invention will become more apparent from the following detailed description when taken in conjunction with the accompanying drawings.

### Brief Description of the Drawings:

- Fig. 1:: schematic diagram of a first embodiment of the inventive system with only one receiver, a source hopping means and a receiver hopping means;
- Fig. 2:: schematic diagram of another embodiment of the inventive system with only one receiver and a receiver hopping means;
- Fig. 3:: schematic diagram of another embodiment of the inventive system with only one receiver and a source hopping means;
- Fig. 4:: schematic diagram of another embodiment of the inventive system with an entangled photon source with a source hopping means and two receivers with a receiver hopping means each;
- Fig. 5:: schematic diagram of another embodiment of the inventive system with an entangled photon source with a hopping means and two receivers;
- Fig. 6:: schematic diagram of another embodiment of the inventive system with an entangled photon source and two receivers with a receiver hopping means each;
- Fig. 7:: schematic diagram of another embodiment of the inventive system with an entangled photon source and two receivers with a receiver hopping means at one receiver;
- Fig. 8:: schematic diagram of a single photon source;
- Fig. 9:: schematic diagram of a single photon source with a first embodiment of a source hopping means by a phase modulator;
- Fig. 10:: schematic diagram of a single photon source with another embodiment of a source hopping means by multiple laser;
- Fig. 11:: schematic diagram of an entangled photon source;
- Fig. 12:: schematic diagram of an entangled photon source with a first embodiment of a source hopping means by a phase modulator;
- Fig. 13:: schematic diagram of an entangled photon source with another embodiment of a source hopping means by multiple laser;
- Fig. 14:: schematic diagram of a receiver;
- Fig. 15:: schematic diagram of a receiver with a first embodiment of a receiver hopping means by a grating;
- Fig. 16:: schematic diagram of a receiver with a first embodiment of a receiver hopping means by an electronic means.

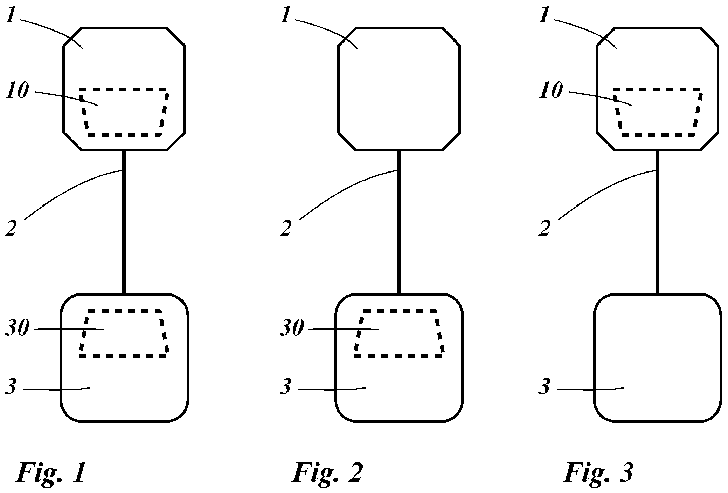

Fig. 1 shows a schematic diagram of a first embodiment of the inventive system with a source 1 and one receiver 3. In this example the source 1 can be a single photon source generating single photons as quantum signal, or a faint laser pulse source generating a sequence of single photons and/or faint laser pulses as quantum signal. The source 1 is connected via a quantum channel 2 with the receiver 3, guiding the photons from the source 1 to the receiver 3.

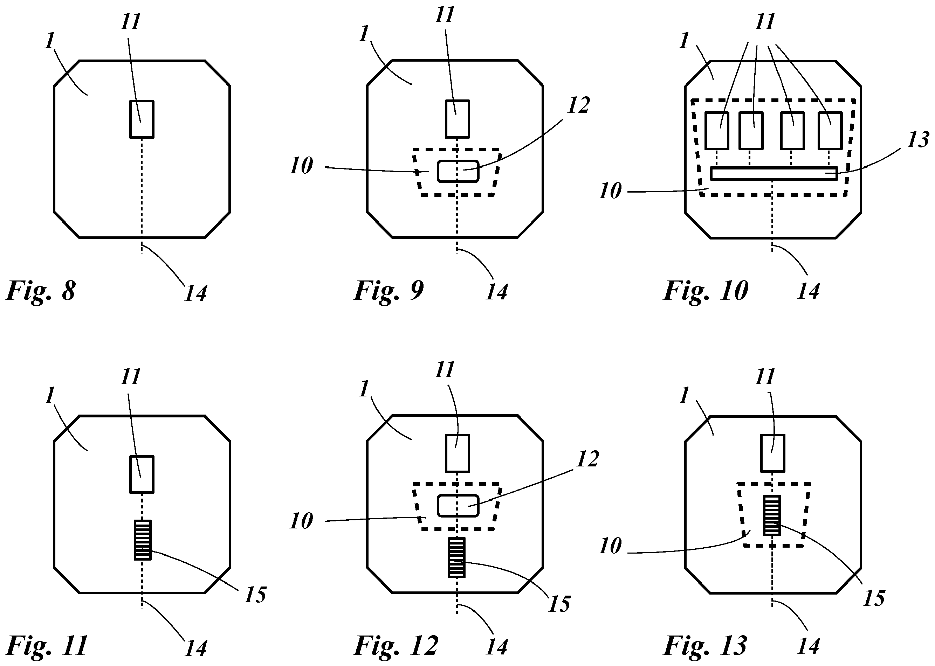

In the embodiment of Fig. 1, the source 1 comprises a source hopping means 10, enable the frequency hopping in the source 1 by the generation of the photons of the quantum signal in at least two different frequencies. The source 1 comprises at least a laser 11 (not shown in Fig. 1) for the generation of the quantum signal. The source hopping means 10 in the embodiment of Fig. 1 can be designed for example like the source hopping means from Fig. 9 or 10 as described below.

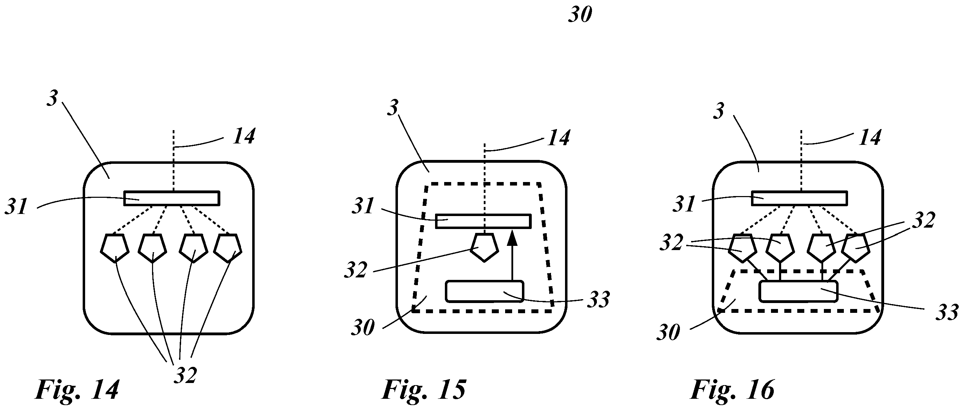

In the embodiment of Fig. 1, the receiver 3 comprises a receiver hopping means 30. The receiver 3 comprises at least a wavelength division multiplexer 31 and a detector 32 (not shown in Fig. 1), enable together with the receiver hopping means 30 the detection of the photons of the quantum signal in at least two different frequencies. The frequency hopping means 30 in the embodiment of Fig. 1 can be designed for example like the receiver hopping means from Fig. 15 or 16 as described below.

Fig. 2 shows another embodiment of the inventive system with a source 1 and one receiver 3. The embodiment of Fig. 2 differs from the embodiment of Fig. 1 only in that the source 1 in Fig. 2 comprises no source hopping means 10. The source 2 of Fig. 2 can be designed as shown in Fig. 8 as described below.

Fig. 3 shows another embodiment of the inventive system with a source 1 and one receiver 3. The embodiment of Fig. 3 differs from the embodiment of Fig. 1 only in that the receiver 3 in Fig. 2 comprises no receiver hopping means 30. The receiver 3 of Fig. 3 can be designed as shown in Fig. 14 as described below.

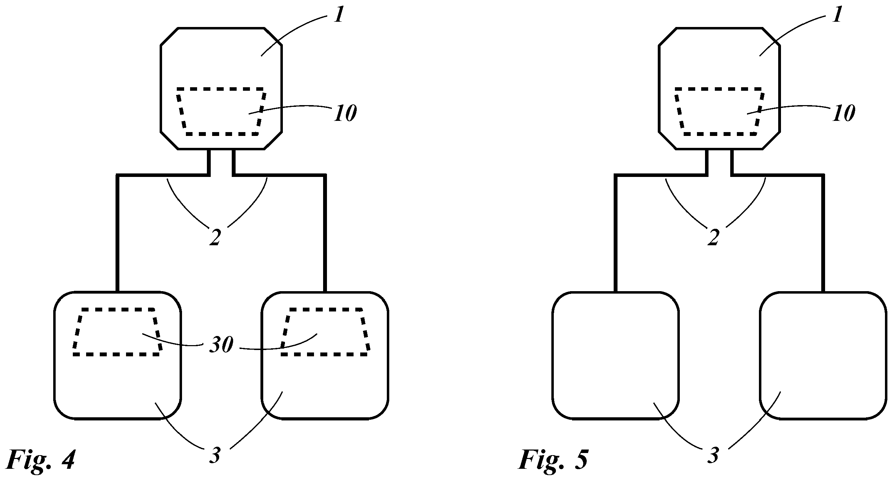

Fig. 4 shows a schematic diagram of another embodiment of the inventive system with a source 1 and two receivers 3. In this example the source 1 is an entangled photon source generating entangled photon pairs. Each pair comprises a signal photon, sent via the quantum channel 2 to a first receiver 3 (left), and an idler photon, sent via the quantum channel 2 to a second receiver 3 (right).

In the embodiment of Fig. 4, the source 1 comprises a source hopping means 10, enable the frequency hopping in the source 1 by the generation of the entangled photons of the quantum signal in at least two different frequencies. The source 1 comprises at least a laser 11 (not shown in Fig. 4) and a non-line element for the generation of the quantum signal. The source hopping means 10 in the embodiment of Fig. 4 can be designed for example like the source hopping means from Fig. 12 or 13 as described below.

In the embodiment of Fig. 4, both receivers 3 comprise a receiver hopping means 30 each. The receivers 3 comprise at least a wavelength division multiplexer 31 and a detector 32 (not shown in Fig. 4), enable together with the receiver hopping means 30 the detection of the photons of the quantum signal in at least two different frequencies. The receiver hopping means 30 in the embodiment of Fig. 4 can be designed for example like the receiver hopping means from Fig. 15 or 16 as described below.

Fig. 5 shows another embodiment of the inventive system with a source 1 and two receivers 3. The embodiment of Fig. 5 differs from the embodiment of Fig. 4 only in that the receivers 3 in Fig. 5 comprise no receiver hopping means 30. The receivers 3 of Fig. 5 can be designed as shown in Fig. 14 as described below.

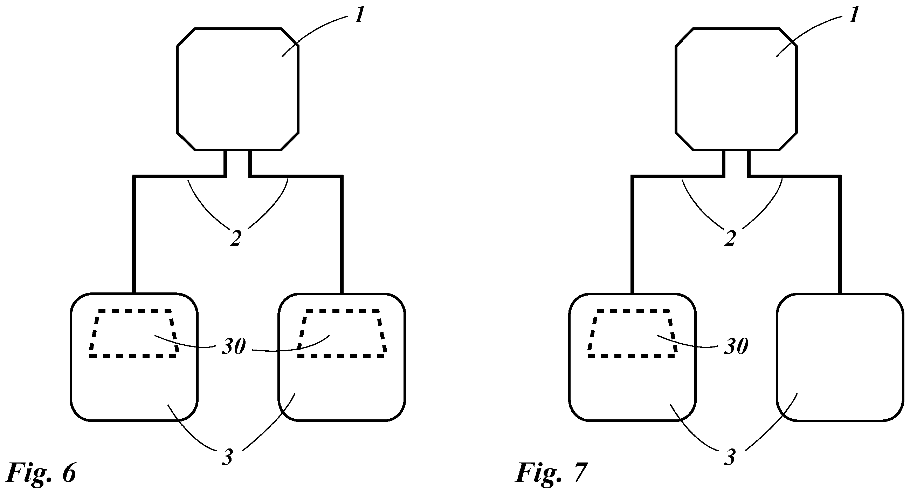

Fig. 6 shows another embodiment of the inventive system with a source 1 and two receivers 3. The embodiment of Fig. 6 differs from the embodiment of Fig. 4 only in that the source 1 in Fig. 6 comprises no source hopping means 10. The source 2 of Fig. 6 can be designed as shown in Fig. 11 as described below.

Fig. 7 shows another embodiment of the inventive system with a source 1 and two receivers 3. The embodiment of Fig. 6 differs from the embodiment of Fig. 4 only in that the source 1 in Fig. 6 comprises no source hopping means 10 and one of the receivers 3 in Fig. 6 comprises no receiver hopping means 30. The source 2 of Fig. 7 can be designed as shown in Fig. 11 as described below. The receiver 3 without receiver hopping means 30 of Fig. 7 can be designed as shown in Fig. 14 as described below.

Fig. 8 shows a schematic diagram of the source 1 as single photon source comprising a laser 11 generating the quantum signal 14. The source 1 comprises in addition a source state generation means (not shown in Fig. 8), in order to enable the source to generate the single photon in at least two pairs of conjugate states. In the embodiment of Fig. 8 the source 1 comprises no source hopping means 10.

Fig. 9 shows a schematic diagram of the source 1 as single photon source comprising the laser 11 and a modulator 12 as a source hopping means 10. In this embodiment, the laser 11 generates single photons with one frequency. The single photons are guided through the modulator 12, which can be for example an electro optical modulator, changing on demand the frequency of some single photons of the quantum signal. Due to the modulator 12 in the embodiment of Fig. 9, the quantum signal with single photons with two frequencies is generated.

Fig. 10 shows a schematic diagram of the source 1 as single photon source multiple lasers 11 and a combination means 13 as source hopping means 10. In this embodiment, each laser 11 generates single photons with one different frequency. The single photons are combined in the combination means 13 to the quantum signal 14. Due to the four lasers 11 and the combination means 13 in the embodiment of Fig. 10, the quantum signal with single photons with four frequencies is generated.

Fig. 11 shows a schematic diagram of the source 1 as entangle photon source comprising a laser 11 and a non-linear element 15 generating the entangled photons as the quantum signal 14. The non-linear element 15 in Fig. 11 can for example be arranged in a Sagnac configuration. In the embodiment of Fig. 11 the source 1 comprises no source hopping means 10.

Fig. 12 shows a schematic diagram of the source 1 as entangled photon source comprising the laser 11 and the non-linear element 15, and a modulator 12 as a source hopping means 10. In this embodiment, the laser 11 generates a pump laser beam with one frequency. The pump laser beam is guided through the modulator 12, which can be for example an electro optical modulator, changing on demand the frequency of the pump laser beam. Due to energy conservation in the non-linear process to generate entangled photons and the different frequencies of the pump laser beam by the modulator 12 in the embodiment of Fig. 12, the quantum signal with entangled photons with at least two frequencies is generated.

Fig. 13 shows a schematic diagram of the source 1 as entangled photon source comprising the laser 11 and the non-linear element 15 as a source hopping means 10. In this embodiment, the laser 11 generates a pump laser beam with one frequency. The pump laser beam is guided through the non-linear element 15. In the embodiment of Fig. 13 the non-linear element 15 is the source hopping means 10 for example by changing the temperature of the non-linear element 15. Due to energy conservation in the non-linear process to generate entangled photons and the different temperatures of the non-linear element 15 in the embodiment of Fig. 13, the quantum signal with entangled photons with at least two frequencies is generated.

Fig. 14 shows a schematic diagram of the receiver 3 comprising a wavelength division multiplexer 31 splitting the quantum signal 14 into parts with different wavelengths and guiding each part to one of the four detectors 32. The receiver 3 in the example of Fig. 14 comprises no receiver hopping means 30.

Fig. 15 shows a schematic diagram of the receiver 3 with a receiver hopping means 30 comprising a controllable wavelength division multiplexer 31, one detector 32 and an electronic means 33 controlling the wavelength division multiplexer 31. In this embodiment, the frequency to be measured is set by the electronic means 33 and the controllable wavelength division multiplexer 31 and guided to the one detector 32.

Fig. 16 shows a schematic diagram of the receiver 3 with the wavelength division multiplexer 31, and four detectors 32, and a receiver hopping means 30 comprising the electronic means 33. The electronic means 33 as the receiver hopping means 30 decides which detector event is taken in a specific hopping window in order to generate a key.

### Reference Signs:

- 1: Source
- 2: Quantum channel
- 3: Receiver

- 10: Source hopping means
- 11: Laser
- 12: Modulator
- 13: combination means
- 14: quantum signal
- 15: non-linear medium

- 30: Receiver hopping means
- 31: Wavelength division multiplexer
- 32: Detector
- 33: Electronic means

## Claims

1. Method for secure quantum communication and secure quantum key distribution (QKD), comprising a source (1) and one or more receivers (3) connected with the source (1) via a quantum channel (2) each, comprising the steps,
i) generation of a quantum signal (14), preferably in the source (1);
ii) transmission of the quantum signal (14) to the one or more receivers (3) via the quantum channel (2) each;
iii) detection of the quantum signal (14) at the one or more receivers (3), preferably in a detection means;
**characterized in that**
in step i) frequency hopping at the generation of the quantum signal (14) is realized, preferably by a source (1) hopping means (10), and/or
in step iii) frequency hopping at the detection of the quantum signal (14) in the one or more receivers (3) is realized, preferably by a receiver hopping means (30).

2. Method according to claim 1,
**characterized in**
the quantum signal (14) is a sequence of single photons, or a sequence of entangled photons, or the sequence of faint laser pulses for decoy state quantum key distribution (QKD).

3. Method according to one of the claims 1 or 2,
**characterized in**
by frequency hopping the quantum signal (14) is generated in step i) in at least two different frequencies, and/or by frequency hopping the quantum signal (14) is detected in step iii) in at least two different frequencies.

4. Method according to one of the claims 1 to 3,
**characterized in**
the frequency of the photons of the quantum signal (14) generation in step i) and/or the detection in step iii) is based on a deterministic order or the frequency is chosen randomly for each photon.

5. Method according to one of the claims 1 to 4,
**characterized in**
the possible change of the frequency by frequency hopping takes place after a certain period of time, preferably called hopping window.

6. Method according to claim 5,
**characterized in**
the hopping window is a fixed period of time or a variable period of time.

7. Method according to one of the claims 1 to 6,
**characterized in**
the frequency hopping is realized at the generation in step i) and at the detection in step iii), or
the frequency hopping is realized only at the generation in step i), or
the frequency hopping is realized only at the detection in step iii), or
with entangled photons, the frequency hopping at the detection in step iii) is realized at one receiver (3), or more receivers (3), or all receivers (3).

8. Method according to one of the claims 1 to 7,
**characterized in**
the source hopping means (10) enables the frequency hopping by passive modulation and/or by active modulation.

9. Method according to one of the claims 1 to 8,
**characterized in**
the frequency hopping in the source (1) with single photons in step i) is realized by the generation of the quantum signal (14) by at least two attenuated lasers (11) and/or at least two on-demand single photon sources with different frequencies in order to generate single photons with at least two different frequencies, and/or
the frequency hopping in the source (1) with single photons in step i) is realized by the generation of the quantum signal (14) by a frequency modulation of the single photons in order to generate single photons with at least two different frequencies, preferably by a frequency modulator, and/or the frequency hopping in the source (1) with single photons in step i) is realized by the generation of the quantum signal (14) by a random generation of the single photon in a specific wavelength out of the broad frequency band of the laser (11) or on demand single photon source by the generation process in order to generate single photons with at least two different frequencies, and/or
the frequency hopping in the source (1) with single photons in step i) is realized by the generation of the quantum signal (14) by a controlled selection of the frequency out of the broad frequency band of the laser or on-demand single photon source, preferably by a source frequency selection means.

10. Method according to one of the claims 1 to 9,
**characterized in**
the frequency hopping in the source (1) with faint laser pulses in step i) is realized by the generation of the quantum signal (14) by at least two attenuated lasers (11) with different frequencies in order to generate a quantum signal (14) with at least two different frequencies, and/or the frequency hopping in the source (1) with faint laser pulses in step i) is realized by the generation of the quantum signal (14) by a frequency modulation of the faint lasers pulses in order to generate single photons and/or faint laser pulses for decoy state quantum key distribution (QKD) with at least two different frequencies, preferably by a frequency modulation means, and/or
the frequency hopping in the source (1) with faint laser pulses in step i) is realized by the generation of the quantum signal (14) by a random generation of the single photons and/or faint laser pulses for decoy state quantum key distribution (QKD) in a specific wavelength out of the broad frequency band of the laser (11) by the generation process in order to generate single photons and/or faint laser pulses for decoy state quantum key distribution (QKD) with at least two different frequencies, and/or the frequency hopping in the source (1) with faint lasers pulses in step i) is realized by the generation of the quantum signal (14) by a controlled selection of the frequency out of the broad frequency band of the laser, preferably by a source frequency selection means.

11. Method according to one of the claims 1 to 10,
**characterized in**
the frequency hopping in the source (1) with entangled photons in step i) is realized by the generation of the quantum signal (14) by at least two pump lasers (11) with different wavelength pumping a non-linear medium (15) in order to generate entangled photons with at least two different frequencies, and/or
the frequency hopping in the source (1) with entangled photons in step i) is realized by the generation of the quantum signal (14) by a frequency modulation of the pump laser (11) pumping the non-linear medium (15) in order to generate entangled photons with at least two different frequencies, and/or
the frequency hopping in the source (1) with entangled photons in step i) is realized by the generation of the quantum signal (14) by pumping at least two different non-linear media (15) in order to generate entangled photons with at least two different frequencies, and/or
the frequency hopping in the source (1) with entangled photons in step i) is realized by the generation of the quantum signal (14) by a temperature change of the non-linear medium (15) in order to generate entangled photons with at least two different frequencies, and/or
the frequency hopping in the source (1) with entangled photons in step i) is realized by the generation of the quantum signal (14) by a frequency modulation of the pump laser (11) and/or one or more of the entangled photons in order generate entangled photons with at least two different frequencies, and/or
the frequency hopping in the source (1) with entangled photons in step i) is realized by the generation of the quantum signal (14) by a random generation of the entangled photons in a specific wavelength out of the broad frequency band entangled photons by the generation process in order to generate single photons with at least two different frequencies, and/or
the frequency hopping in the source (1) with entangled photons in step i) is realized by the generation of the quantum signal (14) by controlled selection of the frequency out of the broad frequency band of the entangled photon source, preferably by a source selection means.

12. Method according to one of the claims 1 to 11,
**characterized in**
the frequency hopping at the receiver (3) in step iii) is realized by the active choice which detector (32) is used, preferably in each hopping window, for the detection of the quantum signal (14), preferably **in that** hopping window, and/or
the frequency hopping at the receiver (3) in step iii) is realized by the selection of the detected frequency at one detector (32) by a controllable wavelength de-multiplexer.

13. Method according to one of the claims 1 to 12,
**characterized in**
the method comprises in addition a step iv),
iv) communication of the frequency hopping at the source (1) and/or at the one or more receivers (3) between the source (1) and the one or more receivers (3) in order to generate a key by a quantum key distribution (QKD) protocol

14. System for secure quantum communication and quantum key distribution (QKD), comprising
a source (1) for the generation of a quantum signal (14), and
one or more receivers (3), comprising a detection means each, for the detection of the quantum signal (14), and
a quantum channel (2) in order to connect the source with the one or more receivers (3) each, for the transmission of the quantum signal (14) from the source (1) to the one or more receivers (3),
**characterized in that**
the quantum channel is a multi-frequency transmission channel for the quantum signal (14), and
the source (1) comprises a source hopping means (10), in order to enable a frequency hopping at the generation of the quantum signal (14), and/or the one or more receivers (3) comprise a receiver hopping means (30), preferably at one or more or all receivers (3), in order to enable a frequency hopping at the detection of the quantum signal (14).

15. Device according to claim 14,
**characterized in that**
the source (1) is a single photon source generating a sequence of single photons, or the source (1) is a faint laser pulse source generating a sequence of single photons and/or a sequence of faint laser pulses for decoy state quantum key distribution (QKD), or the source (1) is an entangled photon source generating a sequence of entangled photons, preferably a sequence of entangled photon pairs or a sequence of a multi-photon entangled state.
